## Europäisches Patentamt

## European Patent Office

## Office européen des brevets

(19)

(11)  **EP 0 762 129 B1**

(12)  **FASCICULE DE BREVET EUROPEEN**

(45) Date de publication et mention
de la délivrance du brevet:
**22.08.2001  Bulletin 2001/34**

(51) Int Cl.⁷: **G01P 15/00**

(21) Numéro de dépôt: **96401920.2**

(22) Date de dépôt: **09.09.1996**

(54) **Procédé et dispositif pour s'affranchir des erreurs dynamiques d'un accéléromètre de précision**

Verfahren und Vorrichtung zur Vermeidung dynamischer Fehler bei einem Präzisionsbeschleunigungsmesser

Method and apparatus for removing dynamic errors in a precision accelerometer

(84) Etats contractants désignés:
**BE CH DE ES GB IT LI NL PT SE**

(30) Priorité:  **11.09.1995  FR 9510603**

(43) Date de publication de la demande:
**12.03.1997  Bulletin 1997/11**

(73) Titulaire: **AEROSPATIALE MATRA**
**75016 Paris (FR)**

(72) Inventeur: **Charette, Gérard**
**91430 Igny (FR)**

(74) Mandataire: **Bonnetat, Christian et al**
**CABINET BONNETAT**
**29, rue de St. Pétersbourg**
**75008 Paris (FR)**

(56) Documents cités:
**EP-A- 0 386 363**        **GB-A- 2 146 776**

**Description**

La présente invention concerne un procédé et un dispositif pour s'affranchir des erreurs dynamiques d'un accéléromètre de précision.

On sait que les accéléromètres de précision, utilisés notamment pour le guidage d'un missile et intégrés à cet effet généralement dans une centrale inertielle, sont caractérisés par une faible bande passante qui permet de filtrer d'éventuels mouvements parasites. Dans le cas d'un système échantillonné, cette faible bande passante permet en outre d'atténuer le repliement de spectre et en particulier celui de la fréquence propre du pendule de l'accéléromètre.

Toutefois, un tel filtrage élimine également des signaux utiles à haute fréquence, relatifs notamment à des chocs ou à des accélérations ou des décélérations brusques et élevées. Ces dernières sont de plus susceptibles de provoquer des mises en butée du pendule, en raison des puissances élevées mises en jeu. Les erreurs dynamiques engendrées alors provoquent, par intégration, des erreurs de vitesse (susceptibles d'atteindre plusieurs mètres par seconde), ainsi que des erreurs de position, qui peuvent être rédhibitoires pour le succès de la mission à effectuer.

Par le document EP-A-O 386 363, on connaît un procédé et un dispositif pour s'affranchir des erreurs dynamiques d'un accéléromètre de précision et pour élargir la bande de mesure d'un tel accéléromètre. A cet effet, un accéléromètre de servitude est associé à l'accéléromètre de précision, l'accéléromètre de servitude présentant une large bande passante. Les deux accéléromètres effectuent des mesures simultanées. La valeur de mesure de l'accéléromètre de précision est utilisée, si la fréquence d'accélération est inférieure à un seuil et la valeur de mesure de l'accéléromètre de servitude est utilisée, si la fréquence d'accélération est supérieure audit seuil.

La présente invention a pour objet de remédier à ces inconvénients. Elle concerne un procédé permettant de s'affranchir, de façon simple et efficace et à coût réduit, des erreurs dynamiques d'un accéléromètre de précision.

A cet effet, selon l'invention, ledit procédé est remarquable en ce que :

- on associe un accéléromètre de servitude présentant une large bande passante, mais une précision réduite, audit accéléromètre de précision ; et
- on réalise de façon répétitive les opérations suivantes :

  . on effectue simultanément une mesure accélérométrique au moyen dudit accéléromètre de précision et une mesure accélérométrique au moyen dudit accéléromètre de servitude ;
  . on calcule la différence entre les valeurs mesurées respectivement par ledit accéléromètre de précision et ledit accéléromètre de servitude ;
  . on compare la valeur absolue de cette différence à un seuil de comparaison dépendant de la précision desdits accéléromètres de précision et de servitude ; et
  . on utilise comme mesure accélérométrique :

    * soit la valeur mesurée par l'accéléromètre de précision, si ladite valeur absolue est inférieure ou égale audit seuil de comparaison ;
    * soit la valeur mesurée par l'accéléromètre de servitude, si ladite valeur absolue est supérieure audit seuil de comparaison.

Ainsi, lorsque la différence entre les valeurs mesurées par les accéléromètres de précision et de servitude est supérieure audit seuil de comparaison, de sorte que cette différence n'est pas due aux erreurs de mesure éventuelles desdits accéléromètres, mais à des erreurs dynamiques de l'accéléromètre de précision (qui n'est pas en mesure de détecter certains phénomènes physiques à fréquence élevée, en raison de sa bande passante réduite), on utilise les mesures de l'accéléromètre de servitude qui présente une large bande passante et peut donc mesurer de tels phénomènes physiques.

La mise en oeuvre du procédé est de plus peu coûteuse puisque le coût d'un accéléromètre de servitude, par exemple tel que ceux utilisés dans l'industrie automobile, est faible.

Dans un premier mode de réalisation de l'invention, de façon avantageuse, ledit seuil de comparaison est égal à la somme des erreurs de mesure maximales prescrites desdits accéléromètres de précision et de servitude, ce qui permet de déterminer facilement ledit seuil de comparaison, à partir desdites erreurs de mesure maximales prescrites qui sont généralement fournies par les fabricants d'accéléromètres.

Bien entendu, ledit seuil de comparaison peut être adapté à la mission à effectuer.

Aussi, dans un second mode de réalisation de l'invention, de façon avantageuse, pour déterminer ledit seuil de comparaison :

- on calcule une pluralité de valeurs absolues de différences entre respectivement des mesures dudit accéléromètre de précision et des mesures dudit accéléromètre de servitude ; et
- on utilise comme seuil de comparaison la valeur absolue la plus élevée.

La présente invention concerne également un dispositif pour s'affranchir des erreurs dynamiques d'un accéléromètre de précision.

Selon l'invention, ledit dispositif est remarquable en ce qu'il comporte :

- un accéléromètre de servitude présentant une large bande passante mais une précision réduite ;
- un moyen de calcul calculant la différence entre les valeurs mesurées simultanément par l'accéléromètre de précision et l'accéléromètre de servitude ;
- un comparateur comparant la valeur absolue de la différence ainsi calculée à un seuil de comparaison dépendant de la précision desdits accéléromètres de précision et de servitude ; et
- un commutateur commandé par ledit comparateur de manière à transmettre, en fonction du résultat de la comparaison effectuée, soit la valeur mesurée par l'accéléromètre de précision, soit la valeur mesurée par l'accéléromètre de servitude.

En raison de la taille et du coût réduits dudit accéléromètre de servitude (ainsi que des autres éléments du dispositif), le dispositif conforme à l'invention est peu encombrant et à bon marché.

Lorsque l'accéléromètre de précision est intégré dans une centrale inertielle d'un mobile volant, par exemple d'un missile, on monte de préférence le dispositif conforme à l'invention à l'extérieur de ladite centrale inertielle et on le réalise de façon indépendante par rapport à cette dernière, ce qui permet d'adapter ledit dispositif à tout instant au type de mission à accomplir.

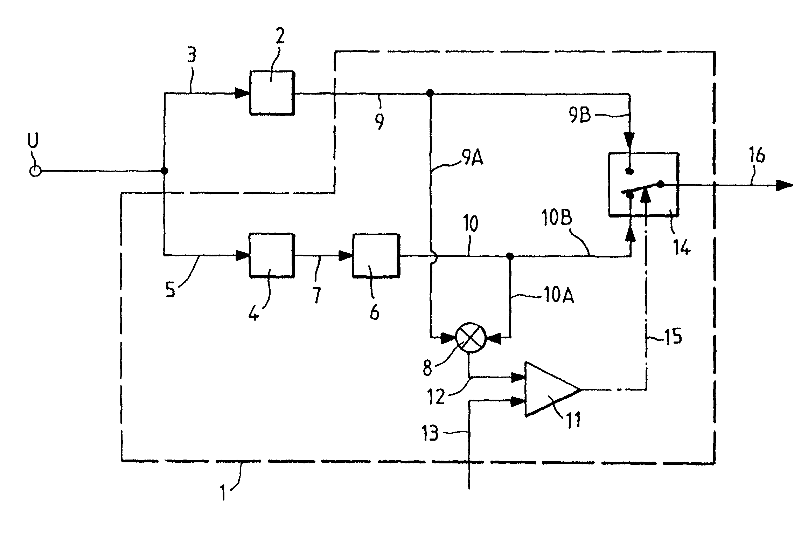

L'unique figure du dessin annexé fera bien comprendre comment l'invention peut être réalisée. Sur cette figure est représenté le schéma synoptique d'un dispositif conforme à l'invention appliqué à un accéléromètre de précision.

Le dispositif 1 conforme à l'invention et représenté schématiquement sur l'unique figure du dessin est associé à un accéléromètre de précision 2, susceptible de mesurer des accélérations U par l'intermédiaire d'une liaison 3, tel que représenté sur la figure, et ledit dispositif 1 est destiné à remédier aux erreurs dynamiques dudit accéléromètre de précision 2.

On sait qu'un tel accéléromètre de précision 2, intégré par exemple dans la centrale inertielle d'un missile, présente une bande passante réduite qui filtre notamment les signaux à haute fréquence. De tels signaux à haute fréquence, relatifs par exemple à des chocs ou à des accélérations ou des décélérations brusques et élevées qui sont généralement utiles et nécessaires pour les traitements envisagés, ne sont donc pas détectés par l'accéléromètre, ce qui est à l'origine d'erreurs dynamiques entraînant des erreurs de vitesse et de position à partir du traitement (par intégration) des mesures de l'accéléromètre.

Pour remédier à ces inconvénients, et plus précisément pour s'affranchir des erreurs dynamiques de l'accéléromètre de précision 2, le dispositif 1 conforme à l'invention comporte :

- un accéléromètre de servitude 4, de coût réduit, présentant une large bande passante mais une précision réduite, et susceptible d'effectuer une mesure Us1 de l'accélération U par une liaison 5 ;
- le cas échéant, un adaptateur 6 relié audit accéléromètre de servitude 4 par l'intermédiaire d'une liaison 7 et destiné à adapter la mesure Us1 pour la rendre compatible avec la mesure Up effectuée par l'accéléromètre de précision 2 pour la même accélération U. A cet effet, ledit adaptateur transforme la valeur mesurée Us1 en une valeur Us2, tel que précisé ci-dessous ;
- un moyen de calcul 8 recevant les résultats dudit accélérateur de précision 2 et dudit adaptateur 6, respectivement par l'intermédiaire de branches 9A et 10A de liaisons 9 et 10 dédoublées en deux branches 9A, 9B et 10A, 10B, et calculant la différence entre les valeurs Us2 et Up (ou Us1 et Up si aucune adaptation n'est nécessaire) ;
- un comparateur 11 comparant la valeur absolue de la différence calculée par ledit moyen de calcul 8 et transmise par une liaison 12, à un seuil de comparaison dépendant de la précision desdits accéléromètres 2 et 4, tel qu'indiqué ci-après, et reçu par une liaison 13 ; et
- un commutateur 14 commandé par ledit comparateur 11 par une liaison 15 et permettant de relier la liaison 16 à la sortie du commutateur 14, soit à la branche 9B de la liaison 9, soit à la branche 10B de la liaison 10.

Plus précisément, selon l'invention :

- la liaison 16 est reliée à la liaison 9, c'est-à-dire la valeur Up mesurée par l'accéléromètre de précision 2 est transmise à la sortie commune du commutateur 14 et du dispositif 1, lorsque la valeur absolue de ladite différence est inférieure ou égale audit seuil de comparaison ; et
- la liaison 16 est reliée à la liaison 10, c'est-à-dire la valeur Us2 est transmise à la sortie du dispositif 1, dans le cas contraire.

On notera par ailleurs que l'adaptateur 6 est susceptible de transformer la valeur Us1, pour obtenir la valeur Us2, par exemple à partir d'une relation du type :

$$Us2 = K.Us1 + B$$

dans laquelle :

- K représente le gain de l'accéléromètre ; et
- B représente le biais de l'accéléromètre de servitude 4.

Ainsi, l'essentiel du coût du dispositif 1 correspond au coût réduit de l'accélérateur de servitude 4.

En plus de son faible coût, le dispositif 1 conforme à l'invention présente de nombreux autres avantages, en particulier :

- il est de réalisation simple ;
- il présente un encombrement réduit ; et
- il peut être monté à l'intérieur ou à l'extérieur d'une centrale inertielle, lorsque l'accéléromètre de précision fait partie d'une telle centrale inertielle.

De préférence toutefois, le dispositif 1 est agencé à l'extérieur de la centrale inertielle, ce qui permet d'adapter ledit dispositif à tout instant au type de mission à accomplir.

Bien entendu, le mode de réalisation décrit précédemment n'a été présenté qu'à titre d'exemple et il ne saurait donc constituer en aucune façon une quelconque limitation à la portée de la présente invention.

**Revendications**

1. Procédé pour s'affranchir des erreurs dynamiques d'un accéléromètre de précision (2), procédé selon lequel :

 - on associe un accéléromètre de servitude (4) présentant une large bande passante, mais une précision réduite, audit accéléromètre de précision (2) ; et
 - on réalise de façon répétitive les opérations suivantes :

 ■ on effectue simultanément une mesure accélérométrique au moyen dudit accéléromètre de précision (2) et une mesure accélérométrique au moyen dudit accéléromètre de servitude (4) ;
 ■ on calcule la différence entre les valeurs mesurées respectivement par ledit accéléromètre de précision (2) et ledit accéléromètre de servitude (4) ;
 ■ on compare la valeur absolue de cette différence à un seuil de comparaison dépendant de la précision desdits accéléromètres de précision et de servitude ; et
 ■ on utilise comme mesure accélérométrique :

 * soit la valeur mesurée par l'accéléromètre de précision (2), si ladite valeur absolue est inférieure ou égale audit seuil de comparaison ;
 * soit la valeur mesurée par l'accéléromètre de servitude (4), si ladite valeur absolue est supérieure audit seuil de comparaison.

2. Procédé selon la revendication 1, selon lequel ledit seuil de comparaison est égal à la somme des erreurs de mesure maximales prescrites desdits accéléromètres de précision (2) et de servitude (4),

3. Procédé selon la revendication 1, selon lequel, pour déterminer ledit seuil de comparaison :

 - on calcule une pluralité de valeurs absolues de différences entre respectivement des mesures dudit accéléromètre de précision (2) et des mesures dudit accéléromètre de servitude (4) ; et
 - on utilise comme seuil de comparaison la valeur absolue la plus élevée.

4. Dispositif pour s'affranchir des erreurs dynamiques d'un accéléromètre de précision (2), ledit dispositif comportant :

 - un accéléromètre de servitude (4) présentant une large bande passante mais une précision réduite ;
 - un moyen de calcul (8) calculant la différence entre les valeurs mesurées simultanément par l'accéléromètre de précision (2) et l'accéléromètre de servitude (4) ;
 - un comparateur (11) comparant la valeur absolue de la différence ainsi calculée à un seuil de comparaison dépendant de la précision desdits accéléromètres de précision (2) et de servitude (4); et
 - un commutateur (14) commandé par ledit comparateur (11) de manière à transmettre, en fonction du résultat de la comparaison effectuée, soit la valeur mesurée par l'accéléromètre de précision (2), soit la valeur mesurée par l'accéléromètre de servitude (4).

5. Dispositif selon la revendication 4, ledit accéléromètre de précision (2) faisant partie d'une centrale inertielle d'un mobile volant, ce dispositif étant monté à l'extérieur de ladite centrale inertielle et réalisé de façon indépendante par rapport à celle-ci.

**Patentansprüche**

1. Verfahren zur Befreiung von den dynamischen Fehlern eines Präzisionsbeschleunigungsmessers (2), nach dem

 - dem genannten Präzisionsbeschleunigungsmesser (2) ein Routinebeschleunigungsmesser (4) zugeordnet wird, der eine große Bandbreite, jedoch eine geringe Genauigkeit besitzt; und
 - wiederholt folgende Operationen durchgeführt werden:

 • es wird gleichzeitig eine Beschleunigungsmessung mit dem genannten Präzisionsbeschleunigungsmesser (2) und eine Beschleunigungsmessung mit dem genannten Routinebeschleunigungsmesser (4) durchgeführt;

• es wird die Differenz zwischen den vom genannten Präzisionsbeschleunigungsmesser (2) beziehungsweise dem Routinebeschleunigungsmesser (4) gemessenen Werten berechnet;

• der absolute Wert dieser Differenz wird mit einem Vergleichsschwellwert, der von der Genauigkeit des genannten Präzisions- und des Routinebeschleunigungsmessers abhängt, verglichen; und

• als Beschleunigungsmeßwert wird:

♦ entweder der vom Präzisionsbeschleunigungsmesser (2) gemessene Wert verwendet, wenn der genannte absolute Wert kleiner oder gleich dem genannten Vergleichsschwellwert ist;

♦ oder; der vom Routinebeschleunigungsmesser (4) gemessene Wert verwendet, wenn der genannte absolute Wert größer als der genannte Vergleichsschwellwert ist.

2. Verfahren nach Anspruch 1,
nach dem der genannte Vergleichsschwellwert gleich der Summe der vorgeschriebenen maximalen Meßfehler des genannten Präzisions- (2) und des genannten Routinebeschleunigungsmessers (4) ist.

3. Verfahren nach Anspruch 1,
nach dem zur Ermittlung des genannten Vergleichsschwellwerts:

- mehrere absolute Differenzwerte zwischen den Meßwerten des genannten Präzisionsbeschleunigungsmessers (2) beziehungsweise den Meßwerten des genannten Routinebeschleunigungsmessers (4) berechnet werden; und

- als Vergleichsschwellwert der größte absolute Wert verwendet wird.

4. Vorrichtung zur Befreiung von den dynamischen Fehlern eines Präzisionsbeschleunigungsmessers (2), wobei die genannte Vorrichtung folgendes umfaßt:

- einen Routinebeschleunigungsmesser (4), der eine große Bandbreite, doch eine geringe Genauigkeit besitzt;

- ein Rechenmittel (8), das die Differenz zwischen den gleichzeitig durch den Präzisionsbe

schleunigungsmesser (2) und den Routinebeschleunigungsmesser (4) gemessenen Werten berechnet;

- einen Komparator (11), der den absoluten Wert der so berechneten Differenz mit einem Vergleichsschwellwert vergleicht, der von der Genauigkeit des genannten Präzisionsbeschleunigungsmessers (2) und des Routinebeschleunigungsmessers (4) abhängt; und

- einen durch den genannten Komparator (11) so gesteuerten Schalter (14), daß in Abhängigkeit vom Ergebnis des Vergleichs entweder der vom Präzisionsbeschleunigungsmesser (2) gemessene Wert oder der vom Routinebeschleunigungsmesser (4) gemessene Wert übertragen wird.

5. Vorrichtung nach Anspruch 4, wobei der genannte Präzisionsbeschleunigungsmesser (2) Teil eines Trägheitsnavigationsleitwerks eines Flugkörpers ist, wobei diese Vorrichtung außerhalb von diesem Trägheitsnavigationsleitwerk montiert ist und unabhängig von diesem ausgeführt ist.

**Claims**

1. Process for circumventing the dynamic errors of a precision accelerometer (2), according to which process:

- an ancillary accelerometer (4) exhibiting a wide passband, but restricted precision, is associated with the said precision accelerometer (2); and

- the following operations are carried out repetitively:

. an accelerometric measurement is performed by means of the said precision accelerometer (2) and, simultaneously, an accelerometric measurement is performed by means of the said ancillary accelerometer (4);

. the difference between the values measured respectively by the said precision accelerometer (2) and the said ancillary accelerometer (4) is calculated;

. the absolute value of this difference is compared with a comparison threshold dependent on the precision of the said precision and ancillary accelerometers; and

. one uses as accelerometric measurement:

* either the value measured by the precision accelerometer (2), if the said absolute value is less than or equal to the said comparison threshold;

* or the value measured by the ancillary accelerometer (4), if the said absolute value is greater than the said comparison threshold.

2. Process according to Claim 1, according to which the said comparison threshold is equal to the sum of the prescribed maximum measurement errors of the said precision (2) and ancillary (4) accelerometers.

3. Process according to Claim 1, according to which, to determine the said comparison threshold:

   - a plurality of absolute values of differences between, respectively, measurements of the said precision accelerometer (2) and measurements of the said ancillary accelerometer (4) is calculated; and
   - the highest absolute value is used as comparison threshold.

4. Device for circumventing the dynamic errors of a precision accelerometer (2), said device comprising:

   - an ancillary accelerometer (4) exhibiting a wide passband but restricted precision;
   - a means of calculation (8) calculating the difference between the values measured simultaneously by the precision accelerometer (2) and the ancillary accelerometer (4);
   - a comparator (11) comparing the absolute value of the difference thus calculated with a comparison threshold dependent on the precision of the said precision (2) and ancillary (4) accelerometers; and
   - a switch (14) controlled by the said comparator (11) in such a way as to transmit, as a function of the result of the comparison performed, either the value measured by the precision accelerometer (2), or the value measured by the ancillary accelerometer (4).

5. Device according to Claim 4, the said precision accelerometer (2) forming part of an inertial unit of a flying craft, this device being mounted outside the said inertial unit and made in a manner independent of the latter.